# EUROPEAN PATENT SPECIFICATION

(11) **EP 2 943 102 B1**
(45) Date of publication and mention of the grant of the patent: **21.09.2016**
(21) Application number: 14702095.2
(22) Date of filing: 14.01.2014
(51) Int. Cl.: A47J 31/44

(54) **MACHINE FOR PREPARING BEVERAGES WITH INTEGRATED USE INTERFACE AND PROCESS FOR OPERATING SAID MACHINE**
MASCHINE ZUR ZUBEREITUNG VON GETRÄNKEN MIT INTEGRIERTER VERWENDUNGSSCHNITTSTELLE UND VERFAHREN ZUM BETRIEB DER BESAGTEN MASCHINE
MACHINE DE PRÉPARATION DE BOISSONS AYANT UNE INTERFACE D'UTILISATION INTÉGRÉE ET PROCÉDÉ DE FONCTIONNEMENT DE LADITE MACHINE

(30) Priority: 14.01.2013 PT 10673213
(43) Date of publication of application: 18.11.2015
(73) Proprietor: Novadelta-Comércio e Industria de Cafés, S.A., 1950-709 Lisboa (PT)
(72) Inventor: NABEIRO, Rui Miguel, 7370-112 Campo Maior (PT)
(74) Representative: Miranda de Sousa, João Paulo Vaz
(86) International application number: PCT/PT2014/000003
(87) International publication number: WO 2014/109660

(56) References cited:
- EP-A1- 2 292 127
- WO-A1-2011/095378

## Description

### Field of the Invention

The present invention refers to the field of beverage preparation machines, in particular to a beverage preparation machine presenting a use interface that combines actuation means of the beverage discharge and of a respective preparation cycle.

The present invention further refers to a process for operating the beverage preparation machine according to the present invention.

### Prior Art

The actuation of the beverage preparation cycles and the regulation of the height of the beverage discharge are two of the more relevant and frequent functions in a machine for preparing aromatic beverages, such as for example espresso coffee and similar, in particular in the case of beverage machines with the possibility of preparing different types of beverages and in the case of elevated intensity of the professional use such as in cafeterias, restaurants and similar.

The prior art includes several solutions relative to the actuation means of beverage preparation machines, provided for example in the form of buttons disposed in a frontal zone of the machine chassis, and at least one beverage discharge, typically provided in a construction element distanced and different from that of the actuation means. Typically, such actuation means are in the form of mechanic buttons or of a digital interface, configured for actuation by a single finger. Examples are disclosed in the US 2007/0214966 A1 and EP 2528044 A1. The configuration of the actuation means in the form of a handle with the approximate dimension of a hand results more advantageous for an ergonomic use of the machines, in particular of the professional type. Examples of this type of actuation interface are disclosed by the CH 693016 A5 and EP 1224894 B1.

Moreover, there are known actuation solutions of the beverage discharge means, according to the type of beverage. In this sense, there are known solutions for varying the position of the beverage discharge in height, such as for example those disclosed by the EP 2292127 A1, EP 2305081 A1, EP 2392240 A1.

Therefore, there is the need for an integrated use interface, combining the basic control functions of the beverage preparation cycles and of the relative position, in particular of the height of the beverage discharge, provided in relative proximity and of easier handling. This need is enhanced in the case of machines for professional use, where there are periods of intense use, eventually with several operations taking place simultaneously in the same beverage preparation machine.

### General description of the Invention

The goal of the present invention is to provide a beverage preparation machine, such as for example espresso coffee and similar, in particular by means of extracting individual doses of aromatic substances, that simplifies the use said beverage preparation machine, notably in what refers to the regulation of the height of the beverage discharge and the actuation of the beverage preparation cycles, in particular in view of a professional, type of use.

The aforementioned goal is attained according to the present invention by means of a beverage preparation machine according to claim 1.

According to a preferred embodiment, said integrated use interface presents a first actuation part that comprises said at least one actuation device and at least a second actuation part that comprises said at least one beverage discharge.

According to another embodiment, said integrated use interface presents several actuation parts disposed concentrically and successively along said longitudinal axis. It is preferred when said actuation parts are configured with a substantially similar cross dimension relative to said longitudinal axis, such as for example a similar diameter.

According to another preferred embodiment, said actuation parts are adapted in interaction with a support element so that they can be actuated independently from each other, in particular moved autonomously from each other relatively to said longitudinal axis of said integrated use interface.

According to another preferred embodiment, said first actuation part is disposed further distanced from the machine chassis, configured so that it corresponds to at least most part, preferentially the entire free end of said integrated use interface.

In particular, said first actuation, part comprises an actuation element for actuation of beverage preparation cycles and is adapted so that said actuation element can be actuated by means of pressure upon said first actuation part, similarly to a pressure button, or by means of rotation of said first actuation part around said longitudinal axis.

According to a particularly preferred embodiment, the second actuation part presents at least one beverage discharge and is adapted so that it can be rotated around said longitudinal axis from an initial position where said beverage discharge is in a substantially vertical position and at a given height above the base of the machine for preparation of beverages, adequate for example for a cup of espresso coffee, to at least one following position where said beverage discharge is in an oblique position relative to the vertical direction and at a higher height relative to the base of the machine, adequate for example for a glass of café latte.

A user may thus start a beverage preparation cycle by means of actuating said first actuation part provided in said integrated use interface, for example by pressing upon the later as a type of press button, or by making it rotate along a given extension and while it wishes to have beverage discharged, and should that be the case, may adjust the adequate height of the beverage discharge by means of rotating a second actuation part provided in said integrated use interface. The configuration of the interface as a handle and the possibility of actuating it as a pressure or rotation button of big dimensions makes the use of the beverage preparation machine according to the present invention substantially easier.

According to a preferred embodiment, the actuation parts are configured so that they form a substantially continuous and coherent body, preferentially of at least approximate cylindrical configuration.

According to another preferred embodiment, the first and second actuation parts are provided in interaction with a respective support element developing along said longitudinal axis, in such a way that at least said first actuation part may carry out a linear movement relative thereto, and at least said second actuation part may carry out a rotation movement around said longitudinal axis in at least a first reference position said longitudinal axis, preferentially a rotation movement in at least two adjacent reference positions and a linear movement at least between said two reference positions, that is along a direction parallel to said longitudinal axis.

According to another embodiment, said first actuation part is configured at least approximately in a box-like form, and the remanding actuation parts are configured at least approximately in a tubular-like form.

According to another preferred embodiment, said actuation device is provided inside of the at least one actuation part of the integrated use interface, in particular of the actuation part that is distanced the furthest from the machine chassis.

According to another embodiment, said actuation device is configured as pressure switch and disposed so that it is actuated by means of a linear movement by said first actuation part along the direction of said longitudinal axis, preferentially supported by elastic reposition means, for example in the form of strings. Alternatively, the actuation device is configured as rotation switch and is actuated by mean of a rotation movement by said first actuation part around said longitudinal axis.

According to another embodiment, the actuation device actuates at least the start and optionally also the end of each beverage preparation cycle.

Another goal of the present invention is to provide a process for efficient use and operation of a beverage preparation machine, in particular a beverage preparation machine according to the present invention.

This goal is attained according to the present invention.by means of a process according to claim 12.

According to a preferred embodiment, the actuation of said first actuation part corresponds at least to the start of a beverage preparation cycle, and the end of said beverage preparation cycle takes place automatically after a previously defined period, or by means of pressing and/or rotating of said first actuation part.

According to another embodiment, the actuation of at least one actuation part of said integrated use interface by means of a rotation movement around a longitudinal axis thereof is preceded by a linear movement of said actuation part along said longitudinal axis, including between an initial reference position and a following reference position.

### Description of the Figures

The invention shall now be explained in greater detail based upon preferred embodiments and on the attached Figures.

The Figures show in simplified schematic representations:
- Figures 1a - 1b:: side and front views, including respective detail views (P01 and P02), of a machine (1) for preparing beverages according.to the invention, presenting a first embodiment of integrated use interface (7);
- Figures 2a - 2b:: side and front views, including respective detail views (P01 and P02), of a machine (1) for preparing beverages according to the invention, presenting a second embodiment of integrated use interface (7).

### Detailed description of preferred embodiments of the invention

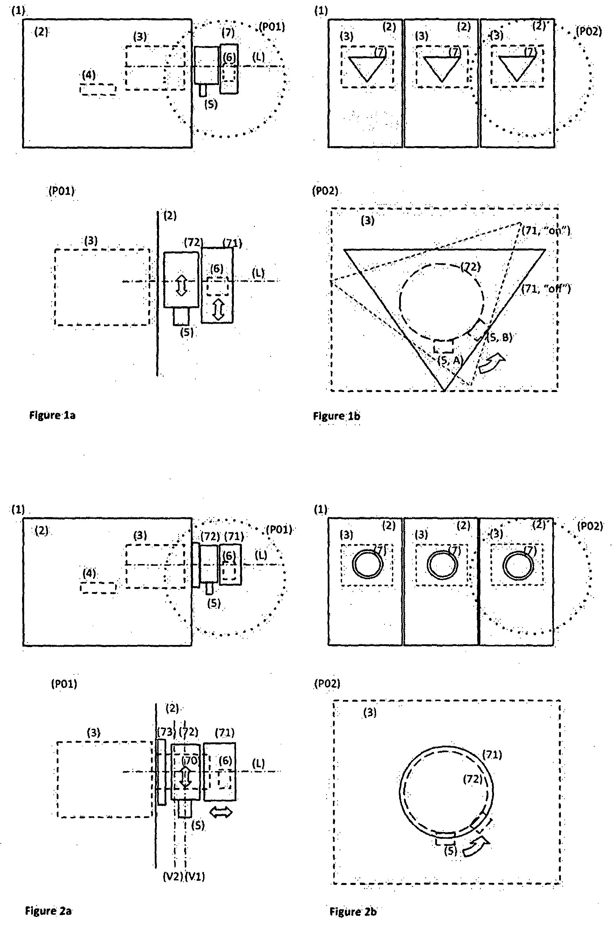

Figures 1a and 1b (top) and respective detail views (P01 and P02, bottom) represent in side view (Figure 1a) and front view (Figure 1b) a machine (1) for preparation of beverages according to the present invention, including a chassis (2), at least one extraction device (3) provided inside of said chassis (2) and in operational connection with one, preferentially respective, control device (4), at least one beverage discharge (5) provided in fluid communication with one, preferentially respective, extraction device (2) and disposed downstream thereof, and at least one actuation device (6) provided in an integrated use interface (7) and in operational connection with the control device (4), so as to provide at least the actuation of start of beverage preparation cycle.

As represented, the integrated use interface (7) is provided in an at least approximate handle-like form, disposed in the frontal zone of the chassis (2) and developing along a longitudinal axis (L). This configuration is advantageous for a use of professional type where it is sometimes required to operate beverage preparation machines (1) that present a plurality of extraction devices (3) in response to multiple almost simultaneous beverage requests.

According to a first embodiment of the present invention, the integrated use interface (7) presents a first actuation part (71) that comprises said actuation device (6) and is preferentially configured in such a way that it corresponds to the free edge of the integrated use interface (7). The integrated use interface (7) further comprises at least a second actuation part (72) that comprises said at least one beverage discharge (5), whereby at least the beverage discharge (5) may be moved along a rotation movement around said longitudinal axis (L). This solution advantageously allows regulating the height of the beverage discharge (5) relative to the base of the machine (1), in particular so as to adjust it to beverage recipients of different heights, such as for example cups or glasses.

The second actuation part (72) is preferentially disposed substantially adjacent to the first actuation part (71) and configured so that it presents outside form and dimensions at least approximately similar to those of the first actuation part (71).

According to a preferred embodiment, the actuation parts (71, 72) are advantageously adapted so that one can be actuated independently from the other.

Thus, as illustrated in the detail (P01) of Figure 1a, a user may start a beverage preparation cycle by means of actuating the first actuation part (71), for example by means of pressing upon it as a sort of pressure button, or by rotating it along a given extension and for the required discharge duration and, should that be case, may adjust the height of discharge by means of rotation of the second actuation part (72). The easy of use of the beverage preparation machines in this substantially enhanced according to the invention, by means.of a relatively simple construction system.

As further illustrated in the detail (P02) of Figure 1b, the first actuation part (71) is configured in a form, in this case triangular, that allows an immediate recognition of whether and how much it is rotated relative to an initial reference position. A user may thus rotate said first actuation part (71), from an initial ("off") position to a following ("on") position, and back. Moreover, in case necessary, a user may also rotate said second actuation part (72) so as to vary the height of beverage discharge, from an initial position (A) corresponding to a lower height of discharge to a following position (B) corresponding to a higher height of discharge relative to the base of the machine (1), and vice-versa.

Figures 2a and 2b present, in views analogous to those of Figures 1a and 1b, a second embodiment where the integrated use interface (7) presents other actuation parts (73) disposed successively and substantially adjacent to each other relative to said longitudinal axis (L). As illustrated by the side view (Figure 2a) and front view (Figure 2b), the integrated use interface (7) substantially simplifies the use of the actuation means and of the beverage discharge means in a machine (1) for preparing beverages according to the invention.

In this embodiment, all said actuation parts (71, 72; 73) are also configured so as to form an at least approximately continuous and coherent body, preferentially of substantially cylindrical general configuration, and with outside dimensions corresponding at least approximately to those of the palm of a hand. According to this embodiment, the actuation of start of the beverage preparation cycle is done by pressuring of a first actuation part (71) as a sort of pressure button, that is linear movement thereof relative to said longitudinal axis (L). The beverage discharge (5) is provided in a second actuation part (72) that can be rotated around said longitudinal axis (L) so as to vary the height of the beverage discharge. This movement may be configured for being carried out continuously or between successive previously defined reference positions.

In constructive terms, as illustrated in the detail views (P01, P02), said actuation parts (71, 72; 73) are provided in autonomous interaction with a respective support element (70), so that at least said first actuation part (71) may be linearly moved relative to said longitudinal axis (L), and the remanding actuation parts (72, 73) may be rotated around said:longitudinal axis (L) in at least one reference position (V1).

Complementary, it would also be possible to consider one actuation part adapted so as to be rotated around said longitudinal axis (L) in at least two reference positions (V1, V2), and linearly moved along said longitudinal axis (L) at least between said reference positions (V1, V2).

## Claims

1. Beverage preparation machine (1) for preparing aromatic beverages such as espresso coffee and similar beverages, presenting a machine chassis (2) and:
- at least one extraction device (3) provided in operational connection with a control device (4),
- at least one beverage discharge (5) provided in flow communication with an extraction device (3) downstream thereof,
- at least one actuation device (6) provided in operational connection with said control device (4) and adapted so as to provide at least the actuation of start of a beverage preparation cycle,
- at least one integrated use interface (7) provided in a handle-like form developing along a longitudinal axis (L) from the frontal zone of said chassis (2) and in operational connection with at least one said extraction device (3),
**characterized in that** said integrated use interface (7) presents said at least one beverage discharge (5) and said at least one actuation device (6), whereby said beverage discharge (5) is adapted so that it can be rotated around said longitudinal axis (L) so as to vary its relative position.

2. Beverage preparation machine according to claim 1, **characterized in that** said integrated use interface (7) presents a first actuation part (71) that comprises said at least one actuation device (6) and at least a second actuation part (72) that comprises said at least one beverage discharge (5).

3. Beverage preparation machine according to claims 1 or 2,
**characterized in that** said integrated use interface (7) presents several actuation parts (71, 72) disposed successively along said longitudinal axis (L), whereby the actuation parts (71, 72) are adapted in interaction with a support element (70) so that they can be independently actuated and preferentially independently moved relative to said longitudinal axis (L).

4. Beverage preparation machine according to claims 2 to 3,
**characterized in that** at least said first actuation part (71) is adapted so that it can carry out at least a linear and/or rotation movement relative to said longitudinal axis (L), and **in that** at least said second actuation part is adapted so that it can carry out at least a rotation movement around said longitudinal axis (L) in at least a first reference position (V1) along said longitudinal axis (L), preferentially at least a rotation movement in at least two reference positions (V1, V2) and a linear movement at least between said two vertical reference positions (V1, V2).

5. Beverage preparation machine according to any of claims 2 to 4,
**characterized in that** said first actuation part (71) is disposed further distanced from said chassis (2) and configured at least approximately in form of a box, and **in that**, other actuation parts are configured at least approximately in a ring-like form.

6. Beverage preparation machine according to any of claims 1 to 5, **characterized in that** said first actuation part (71) is configured as a single pressure and/or rotation button extending over at least most, preferentially all of its outside surface.

7. Beverage preparation machine according to claims 2 to 6, **characterized in that** said at least one actuation device (6) is configured as a pressure switch and disposed so that it is actuated by means of a linear movement of said first actuation part (71) relative to said longitudinal axis (L).

8. Beverage preparation machine according to claims 2 to 6, **characterized in that** said at least one actuation device (6)
is configured as a rotation switch and is disposed so that it is actuated by means of a rotation movement of said first actuation part (71) relative to said longitudinal axis (L).

9. Beverage preparation machine according to any of claims 2 to 8, **characterized in that** said second actuation part (72) is adapted so that it can be rotated from an initial position in which said beverage discharge (5) is at substantially vertical position and at an initial height relative to the base of the machine (1), to at least one following position in which said beverage discharge (5) is in an oblique position and at a higher height relative to the base of the machine.

10. Beverage preparation machine according to any one of previous claims 2 to 9, **characterized in that** said integrated use interface (7) presents a third actuation part (73) providing control means of the temperature and/or pressure of the extraction fluid, whereby said control means are adapted so that they are actuated by means of a rotation movement of said third actuation part (73) around said longitudinal axis (L).

11. Beverage preparation machine according to any one of previous claims 2 to 10, **characterized in that** at least two of said actuation parts (71, 72) present at least one similar characteristic dimension, preferentially a similar diameter.

12. Process for operating a beverage preparation machine, **characterized in that** the preparation of a beverage includes the steps:
- provision of a beverage preparation machine (1) according to any one of previous clams 1 to 11;
- compression and/or rotation of: a first actuation part (71) of the integrated use interface (7), relative to a longitudinal axis (L) thereof so as to actuate at least one actuation device (6) and/or
- rotation of a second actuation part (72) of the integrated use interface (7) around a longitudinal axis (L) thereof so as to vary the relative position of a beverage discharge (5), in particular to place said beverage discharge (5) at a different height relative to the base of said machine (1).

13. Process according to claim 12, **characterized in that** the actuation of said first actuation part (71) corresponds at least to the start of a beverage preparation cycle, and the end of said beverage preparation cycle takes place automatically or by means of pressing and/or rotating of said first actuation part (71).

14. Process according to claims 12 or 13, **characterized in that** the actuation of at least one actuation part (71, 72) by means of a rotation movement thereof is preceded by a linear movement of said actuation part (71, 72), including from an initial reference position (V1) to an adjacent reference position (V2).

## Patentansprüche

1. Getränkezubereitungsmaschine (1) zur Zubereitung von aromatischen Getränken wie Espressokaffee und ähnliche Getränke stellt ein Maschinengehäuse (2) dar und:
- mindestens ein Anzapfgerät (3), vorhanden in der Operationsverbindung mit einem Kontrollgerät (4),
- mindestens eine Getränkeabführung (5), vorhanden in fließender Bewegung mit einem Anzapfgerät (3), stromabwärts davon,
- mindestens ein Betätigungsgerät (6), vorhanden in der operativen Verbindung mit genanntem Kontrollgerät (4) und so angepasst, um mindestens die Startbetätigung eines Getränkezubereitungszyklus zu ermöglichen,
- mindestens eine integrierte Gebrauchsanschlussstelle (7) in einer griffartigen Form vorhanden, die sich entlang einer längslaufenden Achse (L) von der vorderen Zone des genannten Gehäuses (2) und in operativen Verbindung mit mindestens eines genannten Anzapfgerätes (3) entwickelt,
**dadurch gekennzeichnet, dass** genannte integrierte Gebrauchsanschlussstelle (7) mindestens eine genannte Getränkeabführung (5) und mindestens ein genanntes Betätigungsgerät (6) darstellt, wobei genannte Getränkeabführung (5) so angepasst ist, dass sie um die genannte längslaufende Achse (L) rotiert werden und somit ihre relative Position ändern kann.

2. Getränkezubereitungsmaschine gemäß Anspruch 1, **dadurch gekennzeichnet, dass** genannte integrierte Gebrauchsanschlussstelle (7) ein erstes Betätigungsteil (71) darstellt, das mindestens ein Betätigungsgerät (6) umfasst, und mindestens ein zweites Betätigungsteil (72), das mindestens eine genannte Getränkeabführurig (5) umfasst.

3. Getränkezubereitungsmaschine gemäß Ansprüche 1 oder 2, **dadurch gekennzeichnet, dass** genannte integrierte Gebrauchsanschlussstelle (7) mehrere Betätigungsteile (71, 72) darstellt, die nacheinander entlang genannter längslaufenden Achse (L) zurechtgelegt sind, wobei die Betätigungsteile (71, 72) in Interaktion mit einem Unterstützungselement (70) angepasst sind, so dass, sie gegenüber der genannten längslaufenden Achse (L) unabhängig betätigt und vorzugsweise unabhängig bewegt werden können.

4. Getränkezubereitungsmaschine gemäß Ansprüche 2 bis 3, **dadurch gekennzeichnet, dass** mindestens genanntes erstes Betätigungsteil (71) so angepasst ist, dass es mindestens eine geradlinige und/oder rotierende Bewegung gegenüber der genannten längslaufenden Achse (L) durchführen kann, und dass mindestens das genannte zweite Betätigungsteil so angepasst ist, dass es mindestens eine rotierende Bewegung um genannte längslaufenden Achse (L) in mindestens einer hinweisenden Position (V1) entlang der genannten längslaufenden Achse (L) durchführen kann, vorzugsweise mindestens eine rotierende Bewegung in mindestens zwei hinweisenden Positionen (V1, V2) und eine geradlinige Bewegung mindestens zwischen den zwei genannten hinweisenden Positionen (V1, V2).

5. Getränkezubereitungsmaschine gemäß Ansprüche 2 bis 4, **dadurch gekennzeichnet, dass** das genannte erste Betätigungsteil (71) vom genannten Gehäuse (2) weiter entfernt und in mindestens in annähernden Form einer Box gestaltet ist, und dass anderen Betätigungsteilen mindestens mit einer annähernd ringartigen Form ausgebildet sind.

6. Getränkezubereitungsmaschine gemäß Ansprüche 2 bis 5, **dadurch gekennzeichnet, dass** das genannte erste Betätigungsteil (71) als einfachen Druck- und/oder rotierenden Knopf gestaltet ist, der sich über mindestens die meiste, vorzugsweise die ganze Außenoberfläche dehnt.

7. Getränkezubereitungsmaschine gemäß Ansprüche 2 bis 6, **dadurch gekennzeichnet, dass** mindestens ein Betätigungsgerät (6) als Druckschalter gestaltet und so zurechtgelegt ist, dass es mittels einer geradlinigen Bewegung des genannten ersten Betätigungsteils (71) gegenüber der genannten längsläufenden Achse (L) betätigt wird.

8. Getränkezubereitungsmaschine gemäß Ansprüche 2 bis 6, **dadurch gekennzeichnet, dass** mindestens ein Betätigungsgerät (6) als rotierender Schalter gestaltet und so zurechtgelegt ist, dass er mittels einer rotierenden Bewegung des genannten ersten Betätigungsteils (71) gegenüber der genannten längslaufenden Achse (L) betätigt wird.

9. Getränkezubereitungsmaschine gemäß Ansprüche 2 bis 8, **dadurch gekennzeichnet, dass** das genannte zweite Betätigungsteil (72) so angepasst ist, dass es von einer Anfangsposition gedreht werden kann, worin genannte Getränkeabführung (5) wesentlich in senkrechter Position und in einer Anfangshöhe gegenüber dem Boden der Maschine (1) ist, bis zu mindestens einer nächsten Position, worin genannte Getränkeabführung (5) in schiefer Position und in einer höheren Höhe gegenüber dem Boden der Maschine ist.

10. Getränkezubereitungsmaschine gemäß Ansprüche 2 bis 9, **dadurch gekennzeichnet, dass** genannte integrierte Gebrauchsanschlussstelle (7) ein drittes Betätigungsteil (73) darstellt, um Kontrollmitteln der Temperatur und/oder des Druckes der Anzapfflüssigkeit zu ermöglichen, wobei genannte Kontrollmitteln so angepasst wind, dass sie mittels einer rotierenden Bewegung des genannten dritten Betätigungsteils (73) entlang der genannten längslaufenden Achse (L) betätigt werden.

11. Getränkezubereitungsmaschine gemäß Ansprüche 2 bis 10, **dadurch gekennzeichnet, dass** mindestens zwei der genannten Betätigungsteile (71, 72) mindestens eine ähnliche charakteristische Dimension, vorzugsweise einen ähnlichen Durchmesser darstellen.

12. Verlauf zum Betreiben einer Getränkezubereitungsmaschine, **dadurch gekennzeichnet, dass** die Zubereitung eines Getränkes folgende Schritte beinhaltet:
- Vorhanden einer Getränkezubereitungsmaschine (1) gemäß einer der Ansprüche 1 bis 11;
- Druck und/oder Drehung eines ersten Betätigungsteils (71) einer integrierten Gebrauchsanschlussstelle (7) gegenüber einer längslaufenden Achse (L), in dem mindestens ein Betätigungsgerät (6) betätigt wird und/oder
- Drehung eines zweiten Betätigungsteils (72) der integrierten Gebrauchsanschlussstelle (7) um die genannte längslaufenden Achse (L), um eine relative Position einer Getränkeabführung (5) zu ändern, insbesondere um genannte Getränkeabführung (5) an eine andere Höhe gegenüber des Bodens der genannten Getränkezubereitungsmaschine (1) zu stellen.

13. Verlauf gemäß Anspruch 12 **dadurch gekennzeichnet, dass** die Betätigung des genannten ersten Betätigungsteils (71) mindestens dem Start einem Getränkezubereitungszyklus entspricht, und das Ende des genannten Getränkezubereitungszyklus automatisch oder mittels Druck und/oder Drehung des genannten ersten Betätigungsteils (71) stattfindet.

14. Verlauf gemäß Anspruch 12 oder 13 **dadurch gekennzeichnet, dass** eine geradlinige Bewegung der genannten Betätigungsteile (71, 72) die Betätigung von mindestens einem Betätigungsteil (71, 72) mittels einer rotierenden Bewegung davon vorangeht, einschließlich von einer anfänglichen hinweisenden Position (V1) bis zu einer danebenliegenden hinweisenden Position (V2).

## Revendications

1. Machine de préparation de boisson (1) pour la
préparation aromatique de boissons, telles que le café expresso et d'autres boissons similaires, avec un
châssis (2) et :
- Au moins un dispositif d'extraction (3) disposant d'une connexion de fonctionnement avec un dispositif de contrôle (4),
- Au moins une décharge de boisson (5), disposant d'un flux de communication avec un dispositif d'extraction (3) en aval de celui-ci,
- Au moins un dispositif d'actionnement (6), disposant d'une connexion de fonctionnement avec ledit dispositif de contrôle (4) et adapté afin de fournir au moins l'actionnement du démarrage du cycle de préparation de la boisson,
- Au moins une interface d'utilisation intégrée (7) disposant d'une sorte de poignée, développée le long d'un axe longitudinal (L), à partir de la zone frontale dudit châssis (2) et en connexion de fonctionnement avec au moins un dispositif d'extraction mentionné (3), **caractérisé par** ladite interface d'utilisation intégrée (7), elle présente au moins ladite évacuation de boisson (5) et au moins ledit dispositif d'actionnement (6), où ladite décharge de boisson (5) est adaptée afin qu'elle puisse être tournée autours dudit axe longitudinal (L) afin de changer sa position relative.

2. La machine de préparation de boisson selon la revendication 1, **caractérisée par** ladite interface d'utilisation intégrée (7), présente une première partie d'actionnement (71) qui compromet au moins un dispositif d'actionnement (6) et au moins une seconde partie de d'actionnement (72), compromettant au moins une décharge de boisson (5).

3. Machine de préparation de boisson selon les revendications 1 ou 2, **caractérisée par** l'utilisation de l'interface d'utilisation intégrée (7), présente plusieurs parties d'actionnement (71, 72), disposées successivement le long dudit axe longitudinal (L), où les parties d'actionnement (71, 72) sont adaptées en interagissant avec un élément de support (70) afin qu'ils puissent être indépendamment actionnés et de préférence indépendamment déplacés relativement au dit axe longitudinal (L).

4. Machine de préparation de boisson selon les revendications 2 et 3, **caractérisée par le fait qu'**au moins la première partie d'actionnement (71) est adaptée afin qu'elle puisse effectuer au moins un mouvement de rotation et /ou linéaire relativement à l'axe longitudinal (L) et **par le fait qu'**au moins une seconde partie d'actionnement est adaptée afin qu'elle puisse au moins effectuer un mouvement rotatif autours dudit axe longitudinal (L), au moins dans une première position de référence (V1), le long dudit axe longitudinal (L) de préférence au moins un mouvement de rotation dans au moins deux positions de référence (V1, V2) et un mouvement linéaire au moins entre deux positions de référence verticales (V1, V2).

5. Machine de préparation de boisson selon une quelconque revendication entre 2 et 4, **caractérisée par le fait que** ladite première partie d'actionnement (71) est disposée à une distance plus éloignée dudit châssis (2) et est configurée au moins et approximativement en forme de boite et dans le but que d'autres parties d'actionnement soient configurées au moins approximativement en forme annulaire.

6. Machine de préparation de boisson selon une quelconque revendication entre 2 et 5, **caractérisée par le fait que** ladite première partie d'actionnement (71) est configurée en tant que pression unique et/ou le bouton à rotation s'étend sur au moins et de préférence sur l'ensemble de sa surface externe.

7. Machine de préparation de boisson selon une quelconque revendication entre 2 et 6, **caractérisée par le fait qu'**au moins un dispositif d'actionnement (6) est configuré comme un pressostat (ou interrupteur à pression) et est disposé afin d'être actionné au moyen d'un mouvement linéaire de ladite partie d'actionnement (71), relativement à l'axe longitudinal (L).

8. Machine de préparation de boisson selon une quelconque revendications entre 2 et 6, **caractérisée par le fait qu'**au moins un dispositif d'actionnement (6) est configuré comme un interrupteur rotatif et est disposé afin d'être actionné au moyen d'un mouvement de rotation de ladite première partie d'actionnement (71), relativement à l'axe longitudinal (L).

9. Machine de préparation de boisson selon une quelconque revendication entre 2 et 8, **caractérisée par le fait que** ladite seconde partie d'actionnement (72) est adaptée afin qu'elle puisse être tournée d'une position initiale, dans laquelle ladite décharge de boisson (5) se trouve dans une position substantiellement verticale et à une hauteur initiale relativement à la base de la machine (1), vers au moins l'une des positions suivantes, dans laquelle ladite décharge de boisson (5) est dans une position oblique et à une hauteur plus élevée relativement à la base de la machine.

10. Machine de préparation de boisson selon une quelconque revendication entre 2 et 9, **caractérisée par le fait que** l'interface d'utilisation intégrée (7) présente une troisième partie d'actionnement (73) fournissant des moyens de contrôle de la température et/ou de la pression du fluide extrait, où lesdits moyens de contrôles sont adaptés afin qu'ils soient actionnés au moyen d'un mouvement de rotation de ladite troisième partie d'actionnement (73), autours dudit axe longitudinal (L).

11. Machine de préparation de boisson selon une quelconque revendication entre 2 et 10, **caractérisée par le fait qu'**au moins deux des parties d'actionnement (71,72) présentent au moins une dimension caractéristique similaire, de préférence un diamètre similaire.

12. Processus pour faire fonctionner une machine de préparation de boisson, **caractérisé par le fait que** la préparation de la boisson inclut les étapes suivantes :
- Fourniture d'une machine de préparation de boisson: (1) selon une quelconque revendication entre 1 et 11;
- Compression et/ou rotation de la première partie d'actionnement (71) de l'interface d'utilisation intégrée (7) relativement à l'axe longitudinal (L), afin d'actionner au moins l'un des dispositifs d'actionnement (6) et/ou
- Rotation d'une seconde partie d'actionnement (72) de l'interface d'utilisation intégrée (7) autours de l'axe longitudinal (L), afin changer la position relative de la décharge de la boisson (5), notamment pour placer ladite décharge de la boisson (5) à une hauteur différence relativement à la base de ladite machine (1).

13. Processus selon la revendication 12, **caractérisé par le fait que** l'actionnement de ladite première partie d'actionnement (71) correspond à au moins le début du cycle de préparation de la boisson et la fin de dudit cycle de préparation de la boisson a lieu automatiquement ou en appuyant et/ou tournant ladite première partie d'actionnement (71).

14. Processus selon les revendications 12 ou 13, **caractérisé par le fait que** l'actionnement d'au moins une des parties d'actionnement (71, 72) par un mouvement rotatif, précédé par un mouvement linéaire de ladite partie d'actionnement (71, 72), y compris à partir d'une position de référence initiale (V1) jusqu'à une position de référence adjacente (V2).
